# EUROPEAN PATENT APPLICATION

(11) **EP 3 985 961 A1**
(43) Date of publication of application: **20.04.2022**
(21) Application number: 20823426.0
(22) Date of filing: 15.06.2020
(51) Int. Cl.: H04N 5/232, G06N 3/08

(54) **CAMERA DEVICE AND IMAGE GENERATION METHOD OF CAMERA DEVICE**

(30) Priority: 13.06.2019 KR 20190070298; 21.10.2019 KR 20190130677
(71) Applicant: LG Innotek Co., Ltd., Seoul 07796 (KR)
(72) Inventor: PARK, Jung Ah, Seoul 07796 (KR); KIM, Jin Ok, Seoul 07796 (KR); KIM, Hoon, Seoul 07796 (KR); MA, Jong Hyun, Seoul 07796 (KR); JEON, Se Mi, Seoul 07796 (KR)
(74) Representative: Plasseraud IP
(86) International application number: PCT/KR2020/007738
(87) International publication number: WO 2020/251337

(57) **Abstract**

A camera device according to an embodiment may comprise an image sensor that generates a first Bayer data having a first resolution, and a processor that outputs a second Bayer data having a second resolution by using the first Bayer data.

## Description

### [Technical Field]

The present invention relates to a camera module, a mobile terminal device comprising the same, and an image generation method, and more particularly, to a technology for generating a high-resolution image from a low-resolution image using a deep learning algorithm.

### [Background Art]

As technology advances, miniaturization of camera modules becomes possible, and small camera modules have been applied to various IT devices such as mobile phones and PDAs, and the like comprising smartphones, and have been used. Such camera modules are made with image sensors such as CCDs and CMOSs as main components, and are manufactured in a manner to enable focus adjustment, thereby controlling the size of images.

Such camera modules are configured to comprise a plurality of lenses and an actuator, and the actuator moves each lens to change the relative distance so that an object with respect to a subject can be photographed in a manner in which the optical focal length is adjusted.

Specifically, the camera module comprises an image sensor for converting an optical signal received from the outside into an electrical signal, a lens and an infrared (IR) filter for condensing light with the image sensor, a housing for containing them therein, and a printed circuit board for processing the signal of the image sensor, and the focal length of the lens is adjusted by an actuator such as a voice coil motor (VCM) actuator or a micro electromechanical systems (MEMS) actuator, and the like.

Meanwhile, as technology advances, it becomes possible to realize a high-resolution image, and there is also an increasing demand for a technology capable of realizing a high-resolution image from the photographed image of a distant subject.

In general, a camera is equipped with a zoom function to photograph a distant subject, and the zoom function is largely divided by an optical zoom in which an actual lens inside the camera moves to enlarge the subject, and a digital zoom method which obtains a zoom effect by expanding and displaying a part of the screen of the photographed image data of the subject using digital processing method.

In the case of an optical zoom in which an image of a subject is obtained using the movement of a lens, an image having a relatively high resolution can be obtained, but this has a problem in that the internal structure of the camera becomes complicated and the cost increases due to the addition of the parts. In addition, there is a limit to an area in which a subject can be enlarged using an optical zoom, and for this part, technologies for correcting with software and the like are under development.

In addition to these methods, technologies exist to generate more pixel information to implement high-resolution images by moving the internal parts of the camera such as a sensor-shift technology that shakes the sensor with a voice coil motor (VCM) or a micro-electro mechanical systems (MEMS) technology, an optical image stabilizer (OIS) technology that obtains pixel information by shaking the lens with a VCM and the like, and a technology that shakes the filter between the sensor and the lens, and the like.

However, the disadvantages of these technologies are that they synthesize data of multiple parallaxes, so when a moving object is photographed, phenomena such as motion blur or artifacts may occur so that a problem in which the image quality is degraded may occur.

In addition, the problem exist in that the size of the camera module increases as a complex device for implementing this is inserted into the camera, and it is difficult to use in a vehicle installed with a camera because it is implemented by shaking the parts, and thus it can only be used in a stationary environment.

On the other hand, high-resolution realization technologies using software algorithms generally used in TVs comprise single-frame super resolution (SR) or multi-frame super resolution (SR) technology.

Although artifact problems do not occur in the case of these technologies, it is an algorithm that is difficult to apply to devices that can be applied to small camera modules such as mobile, vehicle, IoT, and the like, and in addition, a problem exists in that such technologies are difficult to implement without installing a separate image processor.

### [Detailed Description of the Invention]

### [Technical Subject]

Therefore, the present invention is an invention devised to solve the problems of the prior art as described above, and to provide a camera module capable of generating a high-resolution image and a mobile terminal device comprising the same without causing problems such as motion blur or artifacts.

Specifically, it is to provide a camera module capable of generating a high-resolution image more efficiently and a mobile terminal device comprising the same by mounting a chip with high-resolution implementation algorithm based on deep learning technology on a camera module or a mobile terminal device equipped with a camera module in the form of on-the-fly.

### [Technical Solution]

A camera device according to an embodiment may comprise an image sensor generating a first Bayer data having a first resolution, and a processor that performs deep learning based on the first Bayer data to output a second Bayer data having a second resolution higher than the first resolution.

The processor may generate a first data array by arranging the first Bayer data for each wavelength band, and then a second data array can be generated by performing deep learning based on the first data array that has been generated.

The processor may generate the second Bayer data based on the second data array.

The processor may generate an image having the second resolution based on the second Bayer data.

The processor may comprise: a first data array unit that generates a first data array in which the first Bayer data is arranged for each wavelength band; a deep learning processor that performs deep learning based on the first data array to output a second data array; and a second data array unit that generates a second Bayer data in which the second data array is arranged in a Bayer pattern.

The processor may comprise: at least one first line buffer that stores the first Bayer data for each line; a first data alignment unit that receives information which is being outputted from the first line buffer and generates a first data array which is arranged for each wavelength band; a deep learning processor that performs deep learning based on the first data array to generate a second data array; a second data alignment unit that generates a second data array in which the second data array is arranged in a Bayer pattern; at least one second line buffer that stores the data which has been outputted from the second data alignment unit for each line.

A method for generating an image of a camera device according to another embodiment may generate a step for generating a first Bayer data having a first resolution, a step for generating a first data array that classifies the first Bayer data for each wavelength band, a step for generating a second data array by performing deep learning based on the first data array, and a second Bayer data having a second resolution higher than the first resolution based on the second data array.

The step for generating the second Bayer data may comprise a step for generating the second data array by arranging in a Bayer pattern.

In the method for generating an image of the camera device, the first Bayer data comprises a plurality of row data, and the step for generating the first data array may comprise the step for generating the first data array based on the first Bayer data being outputted through N+1 row lines which are preset.

The step for outputting through the N+1 row lines which are preset may comprise a step for sequentially storing N row data among the plurality of row data of the first Bayer data that is being received, and then outputting the N row data together when transmitting the N+lth row

### [Advantageous Effects]

Since deep learning-based algorithms for realizing high-resolution used a frame buffer, it was difficult to run in real time on general PCs and servers, however, a camera module and a mobile terminal device comprising the same and an image generation method according to an embodiment has an advantage in that it can be realized with a chip having a relatively small size since high-resolution is implemented by using only a few line buffers and high-resolution images are generated in a manner in which network configuration is optimized.

In addition, since the chip to which the present technology is applied can be manufactured in a small size, it can be mounted in various ways at various positions according to the purpose of usage of the mounted device, thereby possibly increasing the degree of freedom of design. In addition, since an expensive processor is not required to perform the existing deep learning algorithm, a high-resolution image can be generated more economically.

In addition, since the present technology can be implemented in a manner that can be mounted at any position of an image sensor module, a camera module, and an AP module, a continuous zoom function may be used by applying this technology to a camera module without zoom or a camera module that only supports fixed zoom for a specific magnification.

In addition, an effect exists in that a continuous zoom function can be utilized in a wider magnification range by applying the present technology to a camera module that only supports continuous zoom in an optical way for a specific magnification.

In addition, in generating high-resolution data, since digital zoom is performed by increasing the resolution of Bayer data, which is raw data but not RGB images, a high-resolution image having a high image quality can be obtained because there is a large amount of information than a case in which the resolution is increased for an RGB image. In addition, by outputting a high-resolution Bayer data, it is possible to maintain the linearity of the data, thereby enhancing the performance for image processing in a post-processing process.

### [Brief Description of Drawings]

FIG. 1 is a block diagram illustrating some components of a camera module according to a first embodiment of the present invention.
FIG. 2 is a diagram illustrating some components of an image generating unit according to a first embodiment of the present invention.
FIG. 3 is a diagram illustrating a process of performing deep learning training according to the first embodiment of the present invention.
FIG. 4 is a diagram illustrating a process of performing deep learning training according to a first embodiment and another embodiment of the present invention.
FIG. 5 is a diagram illustrating information which is inputted to a processor to which a deep learning algorithm is applied and output information which is outputted through a processor.
FIGS. 6 and 7 are diagrams illustrating the states in which a first Bayer image having a first resolution is converted into a second Bayer image having a second resolution by the processor.
FIG. 8 is a block diagram illustrating some components of a mobile terminal device according to a first embodiment of the present invention.
FIG. 9 is a block diagram illustrating some components of a mobile terminal device comprising a camera module according to a first embodiment of the present invention.
FIG. 10 is a block diagram illustrating some components of a mobile terminal device comprising a camera module according to another embodiment of a first embodiment of the present invention.
FIG. 11 is a block diagram illustrating some components of a mobile terminal device comprising a camera module according to another embodiment of a first embodiment of the present invention.
FIG. 12 is a flow chart illustrating a sequence of a method for generating an image according to a first embodiment of the present invention.
FIG. 13 is a block diagram of an image processing device according to a second embodiment of the present invention.
FIG. 14 is a block diagram of a camera module included in an image processing device according to a second embodiment of the present invention.
FIG. 15 is a block diagram of a mobile device to which a configuration of an image processing device according to a second embodiment of a present invention is applied.
FIG. 16 is a block diagram of an image processing device according to another embodiment of a second embodiment of the present invention.
FIG. 17 is a block diagram of a mobile device to which a configuration of an image processing device according to another embodiment of a second embodiment of the present invention is applied.
FIG. 18 is a view for explaining a process of processing an image in an image processing device according to a second embodiment of the present invention.
FIG. 19 is a block diagram of an image processing device according to still another embodiment of a second embodiment of the present invention.
FIG. 20 is a flow chart of an image processing method according to a second embodiment of the present invention.
FIG. 21 is a flow chart of an image processing method according to another embodiment of a second embodiment of the present invention.

### [BEST MODE]

The configuration illustrated in the embodiments and drawings described in this specification are preferred examples of the disclosed invention, and at the time of filing of the present application, there may be various modifications that can replace the embodiments and drawings of the present specification.

In addition, the terms used herein are used to describe the embodiments, and are not intended to restrict and/or limit the disclosed invention. Singular expressions include plural expressions unless the context clearly indicates otherwise.

In the present application, the terms "comprise", "include" or "have" are intended to assign the presence of features, numbers, steps, operations, components, parts or combinations thereof described in the specification, but not to exclude the presence or addition possibilities of one or more other features, numbers, steps, operations, components, parts or combinations thereof in advance, and the terms used in this specification including ordinal numbers such as "the 1st" and "the 2nd" may be used to describe various components, but the components are not limited by the terms.

Hereinafter, embodiments of the present invention will be described in detail with reference to the accompanying drawings so that a person skilled in the art to which the present invention belongs may easily practice. In addition, parts irrelevant to the description are omitted in the drawings in order to clearly describe the present invention.

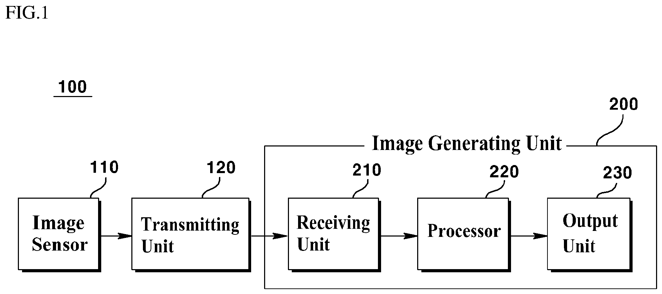

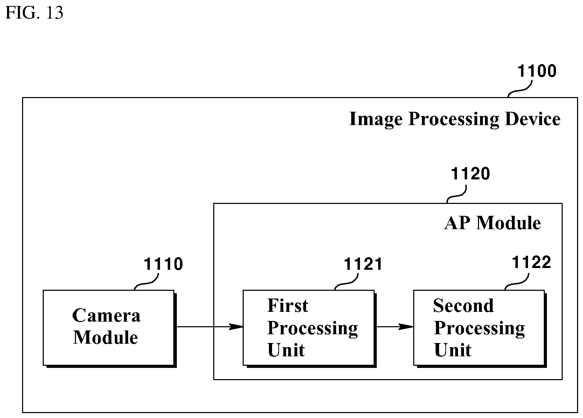

FIGS. 1 to 12 are diagrams for a camera device and a method for generating an image of the camera device according to a first embodiment of the present invention, and FIGS. 13 to 21 are diagrams of an image processing device and an image processing method according to a second embodiment of the present invention.

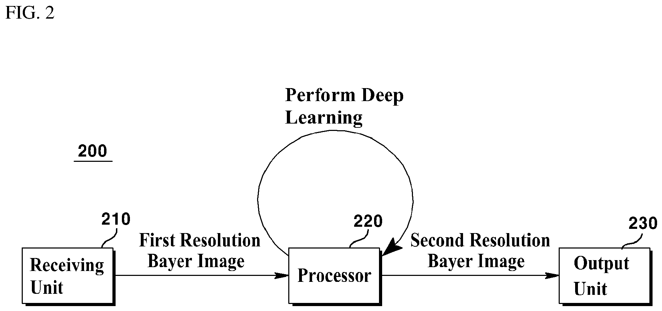

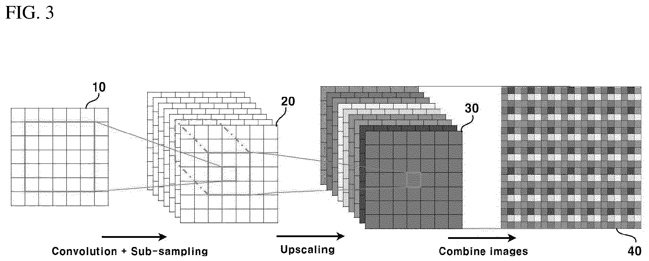

FIG. 1 is a block diagram illustrating some components of a camera module 100 according to a first embodiment of the present invention; FIG. 2 is a diagram illustrating some components of an image generating unit **200** according to a first embodiment of the present invention; and FIG. 3 is a diagram illustrating an example of a deep learning process performed by a processor **220** according to a first embodiment.

Referring to FIG. 1, a camera module **100** according to an embodiment comprises an image sensor **130** that acquires an image of an external subject and a transmitting unit **120** that transmits the image acquired by the image sensor **130** to the image generating unit **200**, and the image generating unit **200** may comprise: a receiving unit **210** that receives an image transmitted by the transmitting unit **120** and transmits it to a processor **220**; a processor **220** that generates an image having a resolution different from the resolution of a received image by applying an algorithm derived as a result of performing deep learning training on the received image from the receiving unit **210**; and an output unit **230** that receives an image generated by the processor **220** and transmits it to an external device, and the like, here, the algorithm derived as a result of performing deep learning training may be the convolutional neural network described above. The processor **220** may be a processor which is trained using a deep learning-based algorithm. It may comprise a pipelined processor and a convolutional neural network trained to generate a second Bayer data from a first Bayer data.

Specifically, the image sensor **130** may comprise an image sensor such as a complementary metal oxide semiconductor (CMOS) or a charge coupled device (CCD) that converts light coming through a lens **120** of the camera module into an electrical signal.

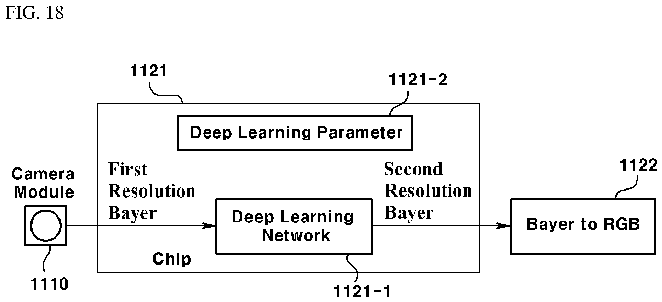

The transmitting unit **120** may transmit an image acquired by the image sensor **130** to the receiving unit **210** of the image generating device **200**. In FIG. 18, although it is illustrated as a component different from the transmission unit **120** and the image sensor **130**, it is not limited thereto, and the image sensor **130** may also simultaneously perform the role of the transmitting unit **120** which will be described later.

Specifically, the transmitting unit **120** may extract the information of the Bayer Pattern from the image acquired by the image sensor **130**, and then transmit this information to the receiving unit **210**.

The image generating unit **200** may comprise: a transmitting unit **210** that receives an image transmitted by a transmitting unit **120** and transmits it to a processor **220**; a processor **220** that generates an image having a higher resolution by using the algorithm generated by the deep learning training on the image received from the transmitting unit **210**; an output unit **230** that receives an image generated by the processor **220** and transmits it to an external device; and the like.

Specifically, after receiving a Bayer image having a first resolution from the receiving unit **210**, the processor **220** generates a Bayer image having a second resolution using an algorithm generated by deep learning training, and then a second Bayer image generated may be transmitted to the output unit **230**. Here, the second resolution means a resolution having a different resolution value from the first resolution, and specifically it may mean a higher or lower resolution than the first resolution. The resolution value that the second resolution may have may be freely set and changed by a user according to the purpose of the user.

Therefore, although not illustrated in the drawings, the camera module **100** according to an embodiment may further include an input unit that receives information on the second resolution, and a user may enter the information for the desired resolution into the camera module **100**.

For example, if the user wants to obtain an image with a high resolution, a user may set the second resolution to a resolution having a large difference from the first resolution, and if a user wants to acquire a new image within a relatively short time, the second resolution value may freely be set to a resolution having less difference with the first resolution.

In addition, the processor **220** may be implemented through a memory (not shown) in which at least one program instruction which is executed through the processor is stored.

Specifically, the memory may comprise a volatile memory such as S-RAM and D-RAM. However, the present invention is not limited thereto, and in some cases, the memory may also comprise non-volatile memory such as a flash memory, a read only memory, an erasable programmable read only memory (EPROM), and an electrically erasable programmable read only memory (EEPROM), and the like.

A typical camera device or camera module receives a Bayer pattern from an image sensor and outputs data in the form of an image through a process of coloring (color interpolation or demosaicing), however, a transmitting unit **120** according to an embodiment may extract information comprising Bayer Pattern information from an image received from the image sensor **130** and transmit the extracted information to the outside.

Here, the Bayer pattern may comprise raw data which is outputted by the image sensor **130** that converts the optical signal included in a camera device or the camera module **100** into an electrical signal.

To be specific about this, an optical signal which is transmitted through the lens **120** included in the camera module **100** may be converted into an electrical signal through each pixel disposed in an image sensor capable of detecting colors of R, G, and B.

Suppose that the specification of the camera module **100** is 5 million pixels, it can be considered that it comprises an image sensor comprising 5 million pixels capable of detecting colors of R, G, and B. Although the number of pixels is 5 million, the structure can be viewed as a monochromatic pixel that detects only the brightness of black and white rather than actually detecting each color is combined with any one of the R, G, and B filters.

That is, in the image sensor, R, G, and B color filters are disposed with a specific pattern on the monochromatic pixel cells arranged by the number of pixels. Therefore, the R, G, and B color patterns are crossingly arranged according to the visual characteristics of a user (that is, a human being), which is called a Bayer Pattern.

In general, the Bayer pattern has a smaller amount of data than image type data. Therefore, even a device mounted with a camera module that does not have a high-spec processor can transmit and receive Bayer pattern image information relatively faster than image type data, and on the basis of this, there is an advantage that can be converted into images having various resolutions.

For an example, even in an environment where a camera module is mounted on a vehicle, and the camera module uses a low-voltage differential signaling (LVDS) with a full-duplex transmission rate of 100 Mbit/s, it may not be overloaded and therefore it may not be a safety hazard for a driver using the vehicle or the safety of the driver because a lot of processors are not required to process the image,

In addition, since it is possible to reduce the size of data transmitted by the communication network in the vehicle, even if it is applied to an autonomous vehicle, there is an effect that can eliminate problems caused by communication methods, communication speeds, and the like depending on the operation of multiple cameras deployed in the vehicle.

In addition, the transmitting unit **120**, in transmitting the image information of the Bayer pattern to the receiving unit **210**, may transmit the information that has been downsampled to 1/n size after receiving the Bayer pattern type frame from the image sensor **130**,

Specifically, the transmitting unit **120** may perform downsampling after performing smoothing through a Gaussian filter or the like on the data of the Bayer pattern which has been received before downsampling. After that, after generating a frame packet based on the downsampled image data, a completed frame packet may be transmitted to the receiving unit **210**. However, these functions may be performed at the same time in the processor **220**, not in the transmitting unit **120**.

In addition, the transmitting unit **120** may comprise a serializer (not shown) that converts the Bayer pattern to serial data in order to transmit Bayer pattern information via a serial communication scheme such as a low voltage differential signaling scheme (LVDS).

Serializers may typically comprise buffers that temporarily store data and phase-locked loops (PLLs) that form a period of transmitted data, or may be implemented together.

So far, the general components of the camera module **100** according to an embodiment have been described. Hereinafter, a method for generating an algorithm which is applied to the processor **220** and the features thereof will be described.

The algorithm applied to the processor **220** of the camera module **100** according to an embodiment is an algorithm that generates an image with a higher resolution than the input image, and it may mean an optimal algorithm which is generated by repeatedly performing deep learning training. The convolutional neural network, which is an algorithm generated by deep learning training, may be trained to receive a first Bayer data having a first resolution and generate a second Bayer data having a second resolution.

Deep learning, sometimes referred to as in-depth learning, it means a set of algorithms related to machine learning that attempts a high level of abstraction (abstractions, summarizing key content or functions in a large amount of data or complex materials) through a combination of several nonlinear transformation methods.

Specifically, deep learning is a learning technique that expresses a certain learning data in a form that a computer can understand (e.g., in the case of an image, pixel information is expressed as a column vector) in order to apply it to learning for many researches (how to create better representation techniques and how to build models to learn them), and it may comprise learning techniques such as Deep Neural Networks (DNN), Deep Belief Networks (DBN), and the like.

For an example, deep learning may first recognize the surrounding environment and transfer the current environment state to a processor. The processor performs an action corresponding to this, and the environment again informs the processor of a compensation value according to the action. Then the processor takes an action which maximizes the compensation value. Through this process, the learning process can be repeatedly performed.

As described previously, the learning data which is utilized while performing deep learning may be a result obtained while a Bayer image having a lower real resolution is being converted into a Bayer image having a higher resolution, or may be information obtained through simulation.

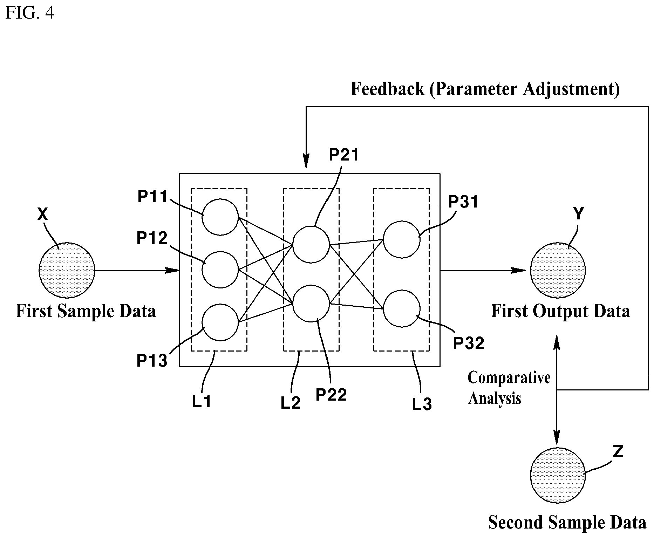

If a simulation process is performed, data can be obtained more quickly by adjusting it according to the simulation environment (background of the image, types of colors, and the like). Hereinafter, through FIGS. 3 and 4, a method for generating an algorithm which is applied to the processor **220** according to an embodiment will be described in detail.

FIG. 3 is a diagram illustrating a process of performing deep learning training according to an embodiment, and FIG. 4 is a diagram illustrating a process of performing deep learning training according to another embodiment.

The deep learning of FIG. 3 is deep learning in which a deep neural network (DNN) algorithm is applied, and is a diagram illustrating a process of generating an image having a new resolution as the DNN algorithm is applied.

A deep neural network (DNN) may be specified as a deep neural network in which multiple hidden layers exist between an input layer and an output layer, a convolutional neural network that forms a connection pattern between neurons, similar to the structure of the animal's visual cortex, a connection pattern between neurons similar to the structure of an animal's visual cortex, and a recurrent neural network that builds up a neural network every moment over time. The convolutional neural network may be a model of at least one of a Fully Convolutional Network (FCN), U-Net, MobileNet, Residual Dense Network (RDN), and Residual Channel Attention Network (RCAN). In addition, it is only natural that a variety of models are available.

Specifically, DNN classifies neural networks by reducing and distorting the amount of data by repeating convolution and sub-sampling. That is, DNN outputs class results through feature extraction and acts of classification, and is mainly used in image analysis and convolution means image filtering.

Referring to FIG. 3, when a process being performed by the processor 220 to which the DNN algorithm is applied is described, the processor 220 performs convolution and sub-sampling on an area to increase magnification based on a Bayer image **10** having a first resolution received from the receiving unit **210**.

Increasing the magnification means expanding only a specific portion of the image acquired by the image sensor **130**. Therefore, since the portion not selected by a user is a portion that the user is not interested in, there is no need to perform a process of increasing the resolution, and convolution and sub-sampling can be performed only on the portion selected by the user.

Sub-sampling refers to a process of reducing the size of an image. As an example, the sub-sampling may use a Max Pool method. Max-Pull is a technique that selects the maximum value in the corresponding area, similar to how neurons respond to the largest signal. Sub-sampling has advantages of reducing noise and increasing the speed of learning.

When convolution and sub-sampling are performed, as illustrated in FIG. 3, a plurality of images **20** may be outputted. Thereafter, the plurality of images having different features may be outputted using an upscaling method based on the images that were outputted. The upscaling method means increasing the image by r^{∗}r times using r² filters which are different from one another.

When a plurality of images **30** is outputted according to the upscaling as illustrated in FIG. 3, the processor **220** may recombine based on such images to finally output a second Bayer image **40** having a second resolution.

The deep learning of FIG. 4 is a diagram illustrating a method of performing deep learning in a different way from deep learning of Fig. 3, and specifically, it is a diagram explaining the process of generating an algorithm being formed by iterative learning.

In the case of deep learning according to FIG. 4, after receiving a first sample data **X** and a second sample data **Z** having resolutions different from each other, deep learning training may be performed based on this.

Specifically, deep learning according to FIG.4 can generate an algorithm that generates an image with a higher resolution based on the parameters generated by comparing and analyzing the second sample data **Z** and an output data **Y** that has undergone a deep learning training using the first sample data **X** as an input data.

Here, the output data **Y** is a data which is outputted through actual deep learning, and the second sample data **Z** is a data which is being inputted a the user, it may mean a data that can be outputted most ideally when the first sample data **X** has been inputted to the algorithm.

Therefore, the algorithm according to FIG. 4 compares and analyzes the second sample data **Z**, which is the most ideal one, as an output result and the first output data **Y**, which is the actual output data, to derive the difference, and then provides feedback to the algorithm in a way to offset the difference.

Specifically, after analyzing the parameters affecting the output data, feedback is provided in a way of changing or deleting parameters or generating new parameters so that the difference between the second sample data **Z**, which is the ideal output data, and the first output data **Y**, which is the actual output data, can be eliminated.

For an example, as illustrated in Fig. 4, it is assumed that there are a total of three layers affecting the algorithm, **L1**, **L2**, and **L3**, and a total of eight parameters **P11, P12, P13, P21, P22, P31,** and **P32** exist in each layer.

In this case, when the parameter was changed in a way to increase the value of the parameter of **P22**, if the difference between the first output data **Y**, which is a data actually outputted, and the second sample data **Z**, which is the most ideal output data, increases, the feedback can change the algorithm in a way to decrease the parameter of **P22.**

Conversely, when the parameter was changed in a way to increase the value of the parameter of **P33**, if the difference between the first output data **Y**, which is a data actually outputted, and the second sample data **Z**, which is the most ideal output data, was decreased, the feedback can change the algorithm in a way to increase the parameter of **P33**.

That is, through this method, the algorithm to which deep learning is applied can allow the first output data **Y**, which is actually being outputted, to be outputted similarly to the second sample data **Z**, which is the most ideal output data.

In this case, the resolution of the second sample data **Z** may be the same as or higher than the resolution of the first output data **Y**, and the resolution of the second sample data **Z** may be the same as the resolution of the first output data **Y**.

In general, in order to implement a processor capable of deep learning with a small chip, the process of deep learning and the number of memory gates should be minimized, here, the factors that greatly affect the number of gates are the complexity of the algorithm and the amount of data processed per clock, and the amount of data processed by the processor depends on the input resolution.

Therefore, in order to reduce the number of gates, the processor **220** according to an embodiment generates an image at a higher magnification in a way that upscaling is performed after reducing the input resolution, and thus there is an advantage of being able to create an image faster.

For example, if an image with the input resolution of 8Mp (Mega Pixel) needs 2× zoom, 2× zoom is performed by upscaling the width and length by 2 times each on the basis of 1/4 area (2Mp). And then 1/4 area (2Mp) is downscaled by 1/4, and after using an image with a resolution of 0.5Mp as an input data for deep learning processing, if 4x zoom is performed in a way that the width and length are respectively upscaled on the basis of the generated image, a zoom image of the same area as the 2x zoom can be generated.

Therefore, the camera module **100** and a method for generating an image according to an embodiment generates an image in a way that deep learning generates images after being learned as much as the magnification corresponding to resolution loss so as to prevent performance degradation due to loss of input resolution, and thus there is an advantage that can minimize performance degradation.

In addition, deep learning-based algorithms for realizing high-resolution images generally use a frame buffer, but in the case of a frame buffer, real-time operation may be difficult in general PCs and servers due to its characteristics.

However, the processor **220** according to an embodiment applies an algorithm that has already been generated through deep learning, and thus can be easily applied to a low-spec camera module and various devices comprising the same, and in applying such an algorithm specifically, since high-resolution is realized by using only a few line buffers, there is also an effect of implementing a processor with a chip having a relatively small size.

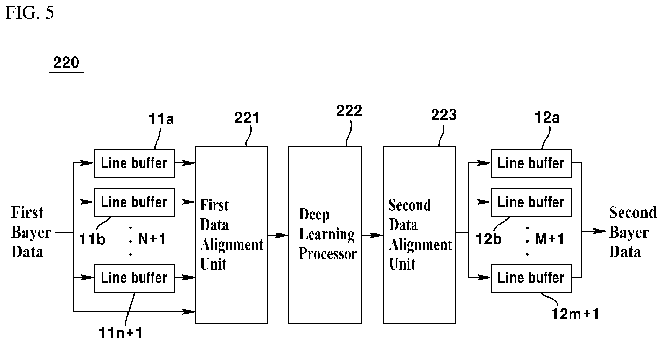

FIG. 5 is a block diagram illustrating some components of the processor **220** according to an embodiment.

Referring to FIG. 5, a processor according to an embodiment may comprise: a plurality of line buffers **11** that receives a first Bayer data; a first data alignment unit **221** that generates a first data array by arranging the first Bayer data which is outputted through a line buffer for each wavelength band; a deep learning processor **222** that performs deep learning according to a preset algorithm; a second data alignment unit **223** that generates a second Bayer data by arranging the second data array which is outputted through the deep learning processor **222** in a Bayer pattern; and a plurality of line buffers **12** that outputs the second Bayer data which is outputted through the second data alignment unit **223**.

The first Bayer data is information comprising the Bayer pattern which is described previously, and although it is described as Bayer data in FIG. 5, it may be defined as a Bayer image or a Bayer pattern.

In addition, in FIG. 5, the first data alignment unit **221** and the second data alignment unit **223** are illustrated as separate components for convenience, but not limited thereto, and the deep learning processor **222** may also perform the functions which are performed by the first data alignment unit **221** and the second data alignment unit **223** together, which will be described later.

Referring to FIG. 5, a first Bayer data having a first resolution, which is image information for the area selected by a user and received by the image sensor **110**, may be transmitted to n+1 line buffers **11a**, **11b**, **... 11n**, **11n+1**. As described previously, since the Bayer image having the second resolution is generated only for the area selected by the user, image information for the area not selected by the user is not transmitted to the line buffer **11**.

Specifically, the first Bayer data comprises a plurality of row data, and the plurality of row data may be transmitted to the first data alignment unit **221** through the plurality of line buffers **11.**

For example, if the area where deep learning is to be performed by the deep learning processor **222** is a 3 × 3 area, a total of three lines must be simultaneously transmitted to the first data alignment unit **221** or the processor **220**, so that deep learning can be performed. Therefore, information on the first line among the three lines is transmitted to the first line buffer **11a**, and then stored in the first line buffer **11a**, and information on the second line among the three lines may be transmitted to the second line buffer **11b**, and then stored in the second line buffer **11b**.

After that, in the case of the third line, since there is no information on the line which is received thereafter, it may not be stored in the line buffer **11** and may be directly transmitted to the processor **220** or the first data alignment unit **221**.

At this time, since the first data alignment unit **221** or the processor **220** must simultaneously receive information on the three lines, information on the first line and information on the second line which have been stored in the first line buffer **11a** and the second line buffer **11b** may also be transmitted simultaneously to the processor **220** or a first image alignment unit **219**.

On the contrary, if the area on which deep learning is to be performed by the deep learning processor **222** is (N+1) × (N+1), deep learning can be performed only when a total of (N+1) lines transmits simultaneously to the first data alignment unit **221** or the processor **220**. Therefore, the information on the first line among (N+1) lines may be stored the first line buffer **11a** after being transmitted to the first line buffer **11a**; the information on the second line among the (N+1) lines may be stored in the second line buffer **11b** after being transmitted to the second line buffer **11b**; and the information on the Nth line among the (N+1) lines may be stored in the Nth line buffer **11n** after being transmitted to the Nth line buffer **11n**.

After that, in the case of the (N+1)th line, since there is no information on the line which is received thereafter, it may not be stored in the line buffer **11** and may be directly transmitted to the processor **220** or the first data alignment unit **221**, and as explained previously, at this time, since the first data alignment unit **221** or the processor **220** must simultaneously receive information on the (N+1) lines, information on the first line through the nth line which have been stored in the line buffers **11a** through **11n** may also be transmitted simultaneously to the processor **220** or a first image alignment unit **219**.

After receiving a Bayer data from the line buffer **11**, the first image alignment unit **219** generates a first data array by arranging Bayer data for each wavelength band, and then may transmit the first data array to the deep learning processor **222**.

The first image alignment unit **219** may generate a first data array which is arranged by classifying the received information into a specific wavelength or a specific color of red, green, or blue.

Thereafter, the deep learning processor **222** may generate a second data array by performing deep learning based on the first data array which has been received through the first image alignment unit **219**.

Specifically, performing deep learning, as described previously through FIGS. 3 and 4, may mean a process of generating an algorithm through inference or iterative learning in order to generate an optimal algorithm, but, at the same time, executing the algorithm generated by these processes also can be said to perform deep learning.

Therefore, the deep learning processor **222** may generate a second data array having a second resolution having a higher resolution than the first resolution by performing deep learning based on the first data array which has been received through the first image alignment unit **219**.

For example, as described previously, if a first data array is received for a 3 × 3 area, deep learning is performed on the 3 × 3 area, and if the first data array is received for an (n+1) × (n+1) area, deep learning may be performed on the (n+1) × (n+1) area.

Thereafter, the second data array generated by the deep learning processor **222** is transmitted to the second data alignment unit **223**, and the second data alignment unit **223** may convert the second data array into a second Bayer data having a Bayer pattern.

Thereafter, the converted second Bayer data is outputted to the outside through a plurality of line buffers **12a**, and the second Bayer data which has been outputted may be generated as an image having a second resolution, which is a higher resolution than the first resolution, by another process.

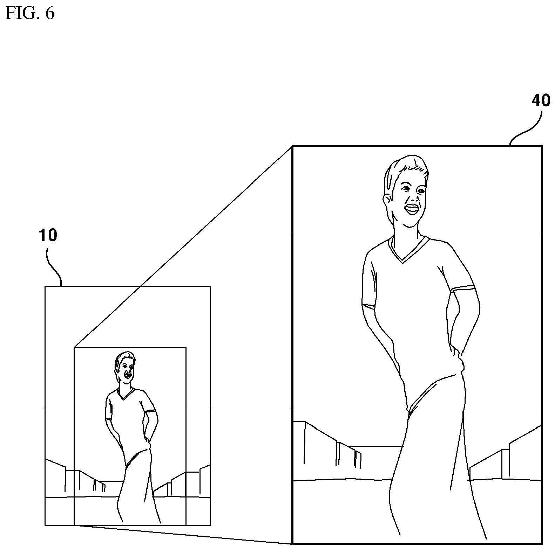

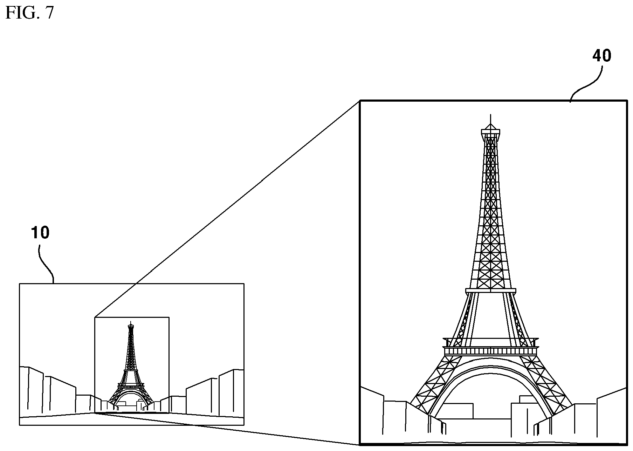

FIGS. 6 and 7 are diagrams illustrating a state in which a first Bayer image having an image of a first resolution is converted into a second Bayer image having a second resolution by the processor **220**.

When a user selects a specific area from a Bayer image **10** having a first resolution, the processor **220** may perform an image conversion process on the area, and as a result, as illustrated in FIGS. 6 and 7, a Bayer image **40** having a second resolution may be generated.

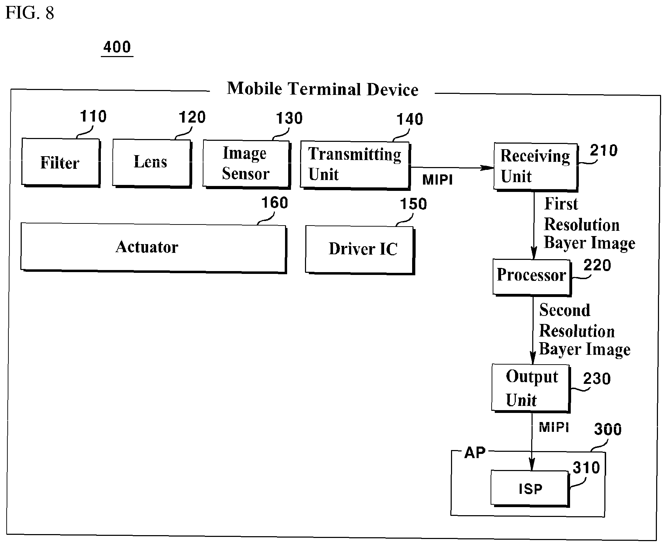

FIG. 8 is a block diagram illustrating some components of a mobile terminal device **400** according to an embodiment.

Referring to FIG. 8, a mobile terminal device **400** according to an embodiment may comprise a filter **110**, a lens **120**, an image sensor **130**, a transmitting unit **140**, a driver IC **150**, an actuator **160**, a receiving unit **210**, a processor **220**, an output unit **230**, and an AP **300** comprising an ISP **310**.

The image sensor **130**, the transmitting unit **140**, the receiving unit **210**, the processor **220** and the output unit **230** are the components that plays the same role as the configuration described in FIGS. 1 and 2, descriptions on this will be omitted.

The filter **110** serves to selectively block light which is being introduced from the outside, and generally it may be positioned on the upper side of the lens **120**.

The lens **120** is a device that finely grinds the surface of a transparent material, such as glass, into a sphere, to collect or divert light from an object to form an optical image, a typical lens **120** used in the camera module **100** may comprise a plurality of lenses having features different from one another.

Driver IC **150** refers to a semiconductor IC that provides a driving signal and data to a panel as an electrical signal so that a text or video image can be displayed on the screen, although it will be described later, the driver IC may be disposed at various positions of the mobile terminal device **400**. In addition, the driver IC (150m Driver IC) may drive an actuator **160**.

The actuator may adjust the focus by adjusting the position of a lens or a barrel comprising the lens. For example, the actuator **160** may be a voice coil motor (VCM) method. The lens **120** may also comprise a varifocal lens. If a varifocal lens is included, the driver IC can drive the varifocal lens. For example, the lens may comprise a liquid lens containing liquid, and in this case, the driver IC may adjust the focus by adjusting the liquid in the liquid lens.

An application processor (AP) **300** is a memory chip for mobile devices and refers to a core semiconductor responsible for various application operations and graphic processing in a mobile terminal device **400**. The AP **300** may be implemented in the form of a system on chip (SoC), which comprises both the functions of the central processing unit (CPU) of a computer and the functions of a chipset that controls the connection of memory, hard disks, graphics cards, and other equipment.

The image signal processing unit (ISP) **300** may receive a second Bayer image which is generated by the processor **220** using a mobile industry processor interface (MIPI) communication and perform an image signal processing process.

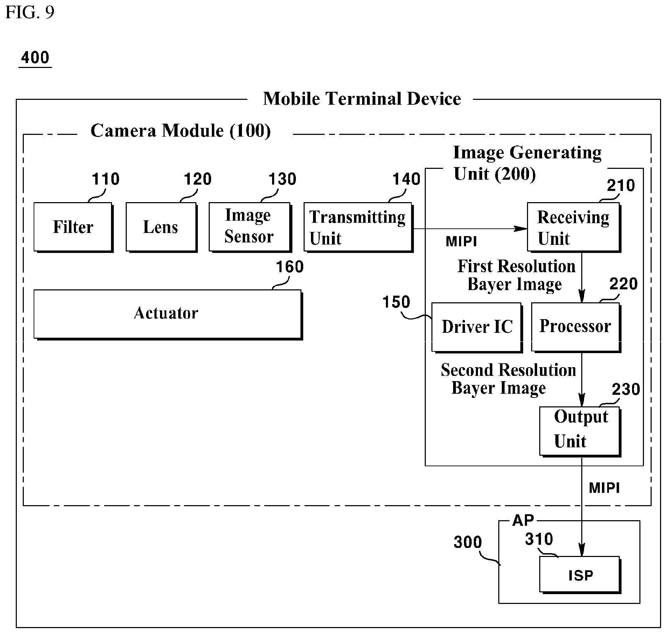

The image signal processing unit **300** may comprise a plurality of sub-processes while processing an image signal. For example, for the received image, it may comprise one or more of gamma correction, color correction, auto exposure correction, and auto white balance. FIGS. 9 to 11 are block diagrams illustrating various embodiments in which the driver IC **150** and the processor **220** may be disposed in the mobile terminal device **400**.

Each of the components illustrated in FIGS. 9 to 11 has been described previously in detail, and will not be described any more, but will be explained focused on the locations where the driver IC **150** and the processor **220** can be disposed.

In one embodiment, the driver IC **150** and the processor **220**, as illustrated in FIG. 7, may be independently implemented as a separate module within a camera module **100**.

Specifically, the processor **220** may be implemented in the form of a chip and included in an image generating unit **200**, and the driver IC **150** may be implemented as a separate chip independently from the image generating unit **200** and the processor **220**.

In FIG. 9, the image generating unit **200** is illustrated as comprising a receiving unit **210**, a processor **220**, and an output unit **230**, but is not limited thereto, and the image generating unit **200** comprises only a processor **220**, and a processor **220**, and may simultaneously perform the roles of the receiving unit **210** and the output unit **230** which have been described previously.

When the driver IC **150** and the processor **220** are implemented in the same form as FIG. 9, since the present technology can be applied in a way that a chip implemented with the image generating unit **200** is inserted into the existing camera module, there is an effect that can implement the present technology regardless of the structure of the existing camera module.

In another embodiment, the driver IC **150** and the processor **220**, as illustrated in FIG. 8, may be implemented together as a single module within the image generating unit **200** which is included in the camera module **100**.

Specifically, the image generating unit **200** may be implemented as a single chip, and in this case, the image generating unit 200 may simultaneously perform the roles of the driver IC **150** and the processor **220**.

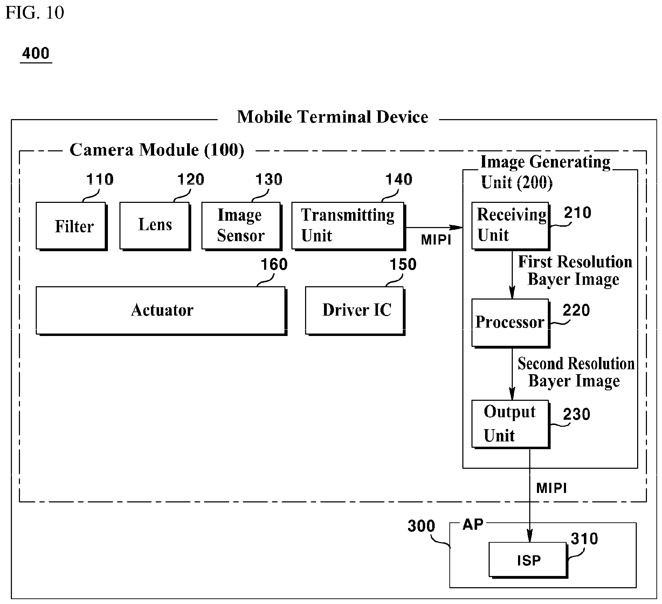

In FIG. 10, the image generating unit **200** is illustrated as comprising a receiving unit **210**, a processor **220**, and an output unit **230**, but is not limited thereto, and the image generating unit **200** comprises only a processor **220** and a driver IC **150**, and the processor **220** may simultaneously perform the roles of the receiving unit **210** and the output unit **230**, as described previously, and the driver IC **150**.

When the driver IC **150** and the processor **220** are implemented in the same form as FIG. 10, the role of the driver IC **150** and the role of the processor **220** can be simultaneously performed by using a single chip, and thus there is an effect that the camera module **100** can be manufactured more economically.

In another embodiment, for the driver IC **150** and the processor **220**, as illustrated in FIG. 9, the driver IC **150** may be mounted inside the camera module **100**, and the processor **220** may be disposed inside the mobile terminal device **400** separately from the camera module **100**.

Specifically, the processor **220** may be implemented in the form of a chip and included in the image generating unit **200**, and the driver IC **150** may be disposed inside the camera module **100** while it is implemented independently of the image generating unit **200** and the processor **220**.

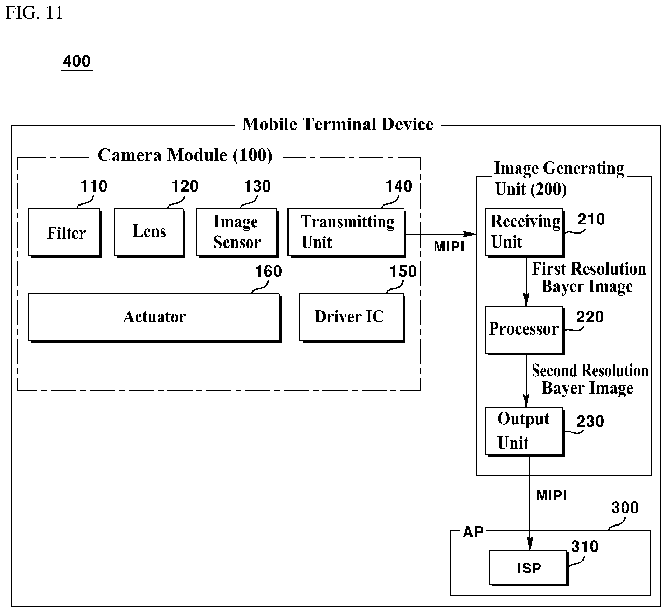

In FIG. 11, the image generation unit **200** is illustrated as comprising a receiving unit **210**, a processor **220**, and an output unit **230**, but is not limited thereto, and the image generating unit **200** comprises only the processor **220**, and the processor **220** may simultaneously perform the roles of the receiving unit **210** and the output unit **230** as described previously.

When the driver IC **150** and the processor **220** are implemented in the same form as FIG. 11, the present technology can be implemented in a manner in which a chip implemented with the image generating unit **200** is inserted into an existing camera module, and thus there is an advantage that the present technology can be implemented regardless of the structure of the existing camera module. In addition, there is an effect of reducing the thickness of the module itself compared to the high image sensor.

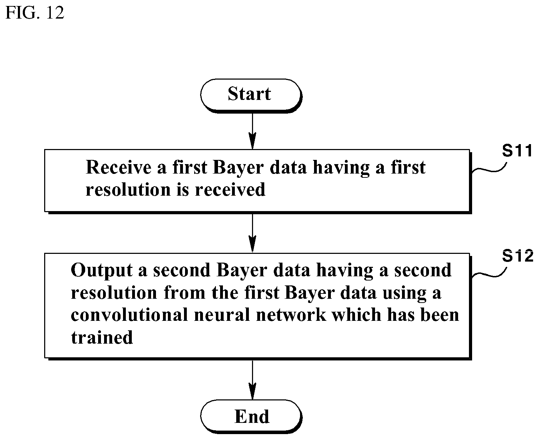

FIG. 12 is a flow chart illustrating a sequence of a method for generating an image according to an embodiment.

Referring to FIG. 12, a first Bayer image having a first resolution may be received from the image sensor **130**. (**S110**)

Thereafter, information on a second resolution may be received from a user. Although not illustrated in the drawing, information on the second resolution may be received from a user through a separate input device. (**S120**)

If information on the second resolution is received from a user, then a second Bayer image may be generated using an algorithms generated through deep learning so as to generate a Bayer image having a second resolution which is set by the user. (**S130**, **S140**)

Through the drawings, a camera module **100** and a mobile terminal device **400** comprising the same and a method for generating an image have been described.

In the case of a deep learning-based algorithm for implementing high-resolution, if a frame buffer is used, there is a problem that real-time operation is difficult in general PCs and servers. However, a camera module and a mobile terminal device comprising the same and a method for generating an image according to an embodiment implement high-resolution by using only a few line buffers, and thus there is an advantage that can be implemented with a chip having a relatively small size.

In addition, since the chip to which the present technology is applied can be manufactured in a small size, it can be mounted in various ways at various positions according to the purpose of usage of the device to be mounted, thereby increasing freedom of design, and there is an advantage in that a processor that is embedded with an algorithm which has been generated by deep learning is used so that an expensive processor is not required, and thus a high-resolution image can be generated more economically.

In addition, since this technology can be implemented by mounting a simple chip on a camera module, the continuous zoom function can be used by applying this technology to a camera module that does not have a zoom function or a camera module that only supports fixed zoom for a specific magnification.

In addition, by also applying the present technology to a camera module that supports only optical zoom for a specific magnification, there is an effect of utilizing the continuous zoom function in a wider magnification range. In addition, a first Bayer data which is outputted by using a learned convolutional neural network is inputted to an image signal processing unit. RGB images may be generated by performing demosaicing RGB conversion of the image signal processing unit of the AP.

A processor that generates a second Bayer data from a first Bayer data may be implemented at the front end of the image signal processing unit (the software logic of the AP, that is, preprocessing logic at the front end of the ISP), may be implemented as a separate chip, or may be implemented within a camera module.

A Bayer data, which is a raw data, has a bit resolution of 10 bits or more, whereas in the case of RGB data that has undergone ISP image processing, RGB data is 8 bits due to data loss such as noise/artifact reduction and compression occurs at the ISP, and thus the information it contains is significantly reduced. In addition, ISP includes nonlinear processing such as tone mapping, making it difficult to process image restoration, however, a Bayer data has linearity which is proportional to light, so image restoration can be easily processed. In addition, in the case of signal-to-noise ratio (PSNR), when using the same algorithm, it is also about 2 to 4 dB higher when using a Bayer data compared to using RGB data, and through this, such as multi-frame de-noise or SR which is performed in the AP can be effectively processed. That is, by using a Bayer data, the performance of the high-resolution conversion can be enhanced, and since a Bayer data is outputted, additional image processing performance of the AP can also be enhanced.

As described previously, with reference to FIGS. 1 to 12, a camera device and a method for generating an image of the camera device according to the first embodiment of the present invention have been described. Hereinafter, with reference to FIGS. 13 to 18, an image processing device and a method for processing an image according to a second embodiment of the present invention will be described. Detailed description of an image processing device and a method for processing an image according to the second embodiment of the present invention is based on the detailed description of each embodiment and may be the same or different in the imaging process, a camera module, an image generation unit, an imaging device, a mobile terminal device, a camera device, and a method for imaging and a name, terms, and functions according to the first embodiment of the present invention.

FIG. 13 is a block diagram of an image processing device **1130** according to a second embodiment of the present invention. The image processing device **1130** according to the second embodiment of the present invention comprises a camera module **1110** and an AP module **1120,** The AP module **1120** comprises a first processing unit **1121** and a second processing unit **1122**. In addition, it may be further comprise one or more processors, or one or more memories or a communication unit. The image processing device **1130** refers to a device comprising a function for processing an image, and may mean any one of electronic devices, such as a mobile terminal comprising from a module for processing an image to an image processing unit.

The camera module **1110** comprises an image sensor.

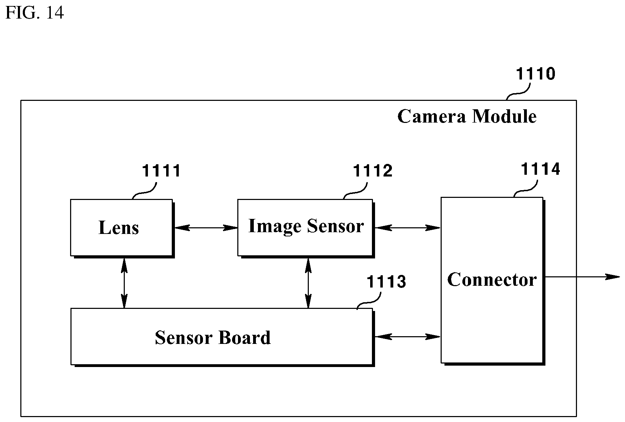

More specifically, the camera module **1110** outputs Bayer data of a first resolution from the image sensor. The camera module **1110,** as illustrated in FIG. 14, may comprise a lens **1111,** an image sensor **1112,** a sensor board **1113** on which an image sensor **1112** is mounted, and a connector **1114** for transmitting and receiving data to and from the outside. The above components can be formed as a single module. That is, as an independent device that is distinguished from the components other than the camera module, it may be implemented in a form in which data is transmitted and received to and from other modules.

The lens **1120** is a device that finely grinds the surface of a transparent material, such as glass, into a sphere, to collect or divert light from an object to form an optical image, a typical lens **1111** used in the camera module **1100** may comprise a plurality of lenses having features different from one another. A filter playing the role of selectively blocking light from the outside may be formed on the upper side of the lens **1111.**

The image sensor **1112** may include an image sensor such as a complementary metal oxide semiconductor (CMOS) or a charge coupled device (CCD) that converts light coming through the lens of the camera module into an electrical signal. The image sensor **1112** may generate a Bayer data comprising information of a Bayer Pattern through a color filter from the acquired image. The Bayer data may have a first resolution according to the specifications of the image sensor **1112** or a zoom magnification which is set when the corresponding image is generated. The image sensor **1112** may be formed on a sensor board **1113.** The lens **1111** may also be formed on the sensor board **1113.**

The optical signal transmitted through the lens **1111** may be converted into an electrical signal through each pixel disposed in the image sensor **1112** capable of detecting colors of R, G, and B. Suppose that the specification of the camera module **1100** is 5 million pixels, it can be considered that it comprises an image sensor **1112** comprising 5 million pixels capable of detecting colors of R, G, and B. Although the number of pixels is 5 million, the structure can be viewed as a monochromatic pixel that detects only the brightness of black and white rather than actually detecting each color is combined with any one of the R, G, and B filters. That is, in the image sensor **1112,** R, G, and B color filters are disposed with a specific pattern on the monochromatic pixel cells arranged by the number of pixels. Therefore, the R, G, and B color patterns are crossingly arranged according to the visual characteristics of a user (that is, a human being), which is called a Bayer Pattern. In general, the Bayer pattern has a smaller amount of data than image type data. Therefore, even a device mounted with a camera module **1110** that does not have a high-spec processor can transmit and receive Bayer pattern image information relatively faster than image type data, and on the basis of this, there is an advantage that can be converted into images having various resolutions.

For example, even in an environment where a camera module **1110** is mounted on a vehicle, and the camera module **1110** uses a low-voltage differential signaling (LVDS) with a full-duplex transmission rate of 100 Mbit/s, it may not be overloaded and therefore it may not be a safety hazard for a driver using the vehicle or the safety of the driver because a lot of processors are not required to process the image. In addition, since it is possible to reduce the size of data transmitted by the communication network in the vehicle, even if it is applied to an autonomous vehicle, there is an effect that can eliminate problems caused by communication methods, communication speeds, and the like depending on the operation of multiple cameras deployed in the vehicle.

In addition, the image sensor **1112** may transmit data after down-sampling a Bayer pattern-shaped frame to a size of 1/n in transmitting Bayer data having a Bayer pattern to the first processing unit **1121.** The downsampling may be performed after performing smoothing through a Gaussian filter or the like on the data of the Bayer pattern which has been received before the downsampling. Thereafter, after generating a frame packet based on the down sampled image data, the frame packet which has been completed may be transmitted to the first processing unit **1121.** However, this function may be performed in the first processing unit **1121** not in the image sensor.

In addition, the image sensor **1112** may comprise a serializer (not shown) that converts the Bayer pattern to serial data in order to transmit Bayer pattern information via a serial communication scheme such as a low voltage differential signaling scheme (LVDS). Serializers may typically comprise buffers that temporarily store data and phase-locked loops (PLLs) that form a period of transmitted data, or may be implemented together.

A connector **1114** outputs data generated by the camera module **1110** to the outside or receives data from the outside. The connector **1114** may be formed as a communication unit, or may be formed as a communication line or data line. The connector **1114** may transmit a Bayer data which is generated and outputted by the image sensor **1112** to the first processing unit **1121.** Here, the connector **1114** formed as a line connected to the outside may be implemented as a mobile industry processor interface (MIPI). The MIPI is an interface between each component constituting a mobile device, and comprises a display serial interface (DSI) and a camera serial interface (CSI) as an interface with enhanced reusability and compatibility. The connector **1114** of the camera module **1110** may be implemented as a CSI.

The camera module **1110** may further comprise a driver IC and an actuator.

Driver IC refers to a semiconductor IC that provides a driving signal and data to a panel as an electrical signal so that a text or video image can be displayed on the screen, and may be disposed at various positions of the mobile terminal device. In addition, the driver IC may drive an actuator. The actuator may adjust the focus by adjusting the position of a lens or a barrel comprising the lens. For example, the actuator may be a voice coil motor (VCM) method. At this time, the lens may also comprise a varifocal lens. If a varifocal lens is included, the driver IC can drive the varifocal lens. For example, the lens may comprise a liquid lens containing liquid, and in this case the driver IC may adjust the focus by adjusting the liquid in the liquid lens.

The AP module **1120** receives a first output data which is outputted from the camera module **1110**.

More specifically, the AP module **1120** receives a first Bayer data which is outputted from the image sensor **1112** from the camera module **1110**. An application processor (AP) **120**, is a memory chip for mobile devices, and when the image processing device **1130** is a mobile device, it means a core semiconductor that is responsible for various application operations and graphic processing in the mobile device. The AP module **1120** may be implemented in the form of a system on chip (SoC) that comprises all the functions of a central processing unit **CPU** of a computer and the functions of a chipset that controls the connection of other equipment such as memory, hard disk, graphics card, etc.

The AP module **1120** includes a first processing unit **1121** and a second processing unit **1122**.

The first processing unit **1121** generates a second Bayer data having a second resolution using a first Bayer data having a first resolution.

More specifically, the first processing unit **1121** increases the resolution of a Bayer data, which is an image data which is generated and outputted by the image sensor **1112**. That is, a second Bayer data of a second resolution is generated from a first Bayer data of a first resolution. Here, the second resolution means a resolution having a different resolution value from the first resolution, and the second resolution may be higher than the first resolution. The first resolution may be the resolution of the Bayer data which is outputted by the camera module **1110**, and the second resolution may be changed according to a user setting or may be a preset resolution. Here, the image sensor **1112** may be an RGB image sensor.

The image processing device **1130** may further comprise an input unit (not shown) that receives information on resolution from a user. The user may input information on a second resolution to be generated by the first processing unit **1121** through the input unit. For example, if the user wants to obtain an image with a high resolution, a user may set the second resolution to a resolution having a large difference from the first resolution, and if a user wants to acquire a new image within a relatively short time, the second resolution value may be set to a resolution having less difference with the first resolution.

The first processing unit **1121** may generate a second Bayer data having a second resolution from a first Bayer data having a first resolution to perform super resolution (SR). Super resolution is a process of generating a high-resolution image based on a low-resolution image, and functions as a digital zoom that generates a high-resolution image from a low-resolution image through image processing rather than physical optical zoom. Super resolution can be used to improve the quality of a compressed or down-sampled image, or it can be used to enhance the quality of an image having resolution depending on device limitations. In addition, it can be used to increase the resolution of images in various fields.

In performing the process of increasing the resolution, such as super resolution, the process of increasing the resolution using Bayer data rather than the RGB image may improve the quality of the result of increasing the resolution. Since the Bayer data is a raw data which is generated and outputted by the image sensor **1112**, it contains more information than an RGB image which is generated by performing image processing.

RGB data may also be processed with 10-bit or higher, but it is currently applied only to displays and the like, and when using existing RGB data, it has 8-bit data for each channel. Also, information may be lost due to demosaicing which is performed in the ISP, and the like. However, a Bayer data, on the other hand, has 10-bit data in an unprocessed format that is currently used in mobile. A Bayer data in the 12-bit or 14-bit format is also possible. In this way, when using a Bayer data, since the amount of information of the input to be used for super resolution is greater than that of an RGB data, increasing the resolution using a Bayer data is superior in processing quality compared to increasing the resolution using an RGB image.

The first processing unit **1121** may increase the resolution of an IR data as well as a Bayer data. When the image sensor **1112** is a ToF sensor, an IR data having a fourth resolution may be generated using an IR data having a third resolution generated by the ToF sensor and outputted by the camera module **1110.** The third resolution may be the resolution of the IR data which is outputted by the ToF sensor **1120,** and the fourth resolution may be changed according to a user setting or may be a preset resolution. The fourth resolution may be a resolution having the same resolution value as the second resolution. When using an IR image which is generated from an IR data to improve the image quality of an RGB image generated from a Bayer data, IR data may be generated in a way that the size, that is the resolution, of the IR image and the RGB image are the same, and the fourth resolution of the IR data is the same as the second resolution of the second Bayer data.

The second processing unit **1122** receives a second output data which is outputted from the first processing unit **1121** and performs image processing.

More specifically, the second processing unit **1122** generates an image by performing image signal processing (ISP) on the second output data which is outputted from the first processing unit **1121.** The second processor **1122** may be an image signal processor (ISP). A mobile industry processor interface (MIPI) communication may be used to receive a second output data which is outputted by the first processing unit **1121** and perform an image signal processing process.

The second processing unit **1122** may generate an RGB image from a second Bayer data when the second output data is the second Bayer data. At this time, the second processing unit **1122** may perform a plurality of sub-processes while processing the image signal. For example, one or more of gamma correction, color correction, auto exposure correction, and auto white balance may be performed on the received image.

When the first processing unit **1121** outputs an IR data as well as a Bayer data, the second processing unit **1122** may generate an RGB image with improved image quality by calculating from an RGB image which is generated from the Bayer data, which is a second output data of the first processing unit **1121,** and an IR image generated from IR data. In a low-light environment, an RGB image generated from a Bayer data alone has low brightness or high noise, which significantly degrades image quality. In order to improve image quality degradation that may occur when generating an RGB image with a Bayer data alone, an IR image may be used. That is, a second RGB image with improved image quality may be generated by calculating an RGB image and an IR image. By using a camera module **1110** including an RGB image sensor and a ToF image sensor, it is possible to improve low illumination of an RGB image using high-resolution IR data as well as a zoom function to increase the resolution of each data. The Bayer data or the IR data can generate a high-resolution RGB image, a high-resolution IR image, and a high-resolution depth image through a process of increasing the resolution. In addition, since the IR image has a very lower resolution than the RGB image (below llMp), the processing unit that processes IR data at high resolution is suitable to be implemented in the form of a chip. In order to make a miniaturized chip, it is important to minimize the algorithm logic and data memory required for computation, because the resolution of the camera device is directly related to the memory and the amount of computation. In the process of increasing the resolution of the IR data, a chip of the first processing unit **1121** that increases the resolution of the Bayer data may be used. It only requires switching the weight values learned to increase the resolution of the IR data while using a part of the chip of the first processing unit **1121.** If an RGB image in low light conditions is improved using an IR image with improved resolution, a higher improvement can be achieved, and the recognition rate is improved when applied to various applications (e.g., face recognition, object recognition, size recognition, and the like) through a depth image and fusion.

The first processing unit **1121** may generate a second Bayer data from a first Bayer data. Here, the meaning of performing deep learning means generating a second Bayer data using a convolutional neural network derived through deep learning. The second Bayer data may be generated from the first Bayer data using an algorithm that increases resolution other than deep learning. It is natural that various algorithms used for super resolution (SR) can be used. The process, in which the first processing unit **1121** increases the resolution of the first output data, will explained in detail with reference to FIG. 18 and FIGS. 3 to 7.

The first processing unit **1121** may be implemented in the form of a chip which is distinguished from the second processing unit 1122. The first processing unit **1121** for generating the second Bayer data from the first Bayer data and the second processing unit **1122** for performing image signal processing may be implemented as separate chips. By forming the first processing unit **1121** into a small chip and applying it on the AP module, only configurations that increase the resolution of a Bayer data can be added on the AP module without changing the existing configuration of the AP module such as the second processing unit **1122** which is an ISP.

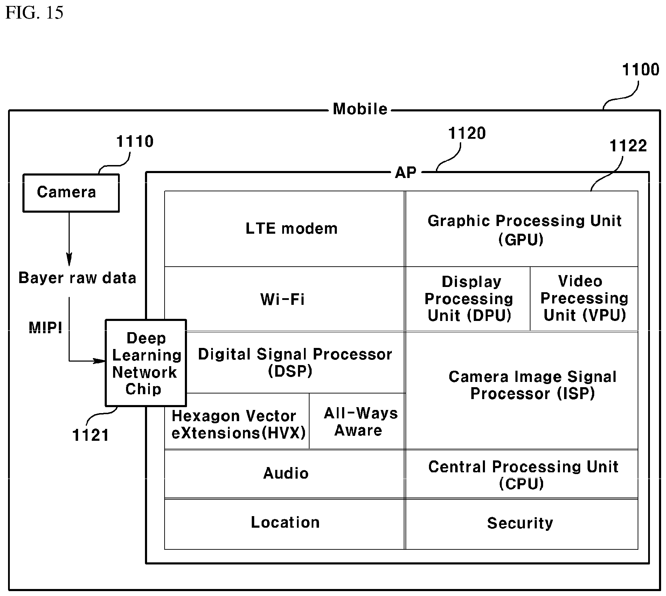

As shown in FIG. 15, when the image processing device **1130** is a mobile device, the camera module **1110** may be a camera device included in the mobile device, and an AP module **1120** for processing various applications of the mobile device is formed therein, and the first processing unit **1121** may be implemented on the AP module in the form of a separate chip which is distinguishable from the second processing unit **1122**, which is an ISP processor.

The Bayer data, which is the first output data generated and being outputted by the camera module **1110**, may be an unprocessed raw data, and at this time, the Bayer data may be represented as Bayer raw data. The Bayer data is received by the first processing unit **1121**, which is formed in the form of a chip on the AP module, through MIPI communication. The first processor **1121** generates a second Bayer data from a first Bayer data using a convolutional neural network which has been learned by performing deep learning. The first processing unit **1121** may be represented as a deep learning network chip. Since the first processing unit **1121** receives and processes a low-resolution Bayer row data, it is not necessary to consider MIPI bandwidth or additional work for a control signal separate from the camera module. Therefore, since existing devices can be used as they are, the compatibility is high and design freedom is also increased.

The first processing unit **1121** generates a second Bayer data using a first Bayer data, and a second output data which is outputted from the first processing unit **1121** is received by the second processing unit **1122** to perform image signal processing, thereby generating an image.

The first processing unit **1121** may be implemented on the AP module in the form of an IP block which is distinguishable from the second processing unit.

An intellectual property (IP) block refers to a reusable logic unit, cell, or chip layout design, and refers to a block considered as the intellectual property of a specific party. The IP block may be an IP core. IP blocks may be used as building blocks within IC designs by parties with licensed and/or owned intellectual property (e.g., patents, source code copyrights, trade secrets, know-how, and the like) existing in the design. The IP block is a design block applicable to a corresponding chip for the design of a chip such as an AP module, and the chip design can be facilitated by using the IP block. By using a plurality of IP blocks, it is possible to design a chip such as a SoC.

The AP module includes IP blocks of various applications that perform functions on the mobile device. It may comprise: IP blocks of the applications that perform the functions required for the mobile device such as LTE modem, Graphic Processing Unit (GPU), Wi-Fi, Display Processing Unit (DPU), Video Processing Unit (VPU), Digital Signal Processor (DSP), Hexagon Vector eXtensions (HVX), All-Ways Aware, Audio, Central Processing Unit (CPU), Location, Security, and the like; and Camera Image Signal Processor (ISP) corresponding to the second processing unit **1122** that performs image signal processing on the image signal which is received from the camera device.

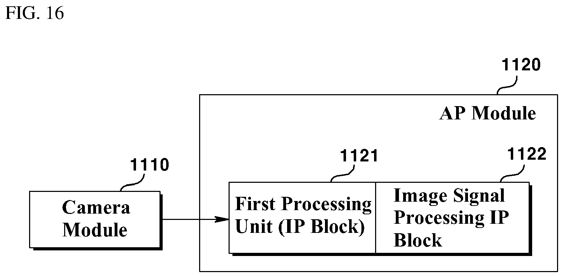

The first processing unit **1121** and the second processing unit **1122,** as in shown in FIG. 16, may be implemented as an IP block of the AP module. The second processing unit **1122** may be an image signal processing (ISP) IP block. The first processing unit **1121** that generates a second Bayer data from a first Bayer data may be configured as an IP block and added to the existing chip of the AP module. At this time, the IP block of the first processing unit **1121** may be formed to be distinguishable from the image signal processing IP block which is the second processing unit.

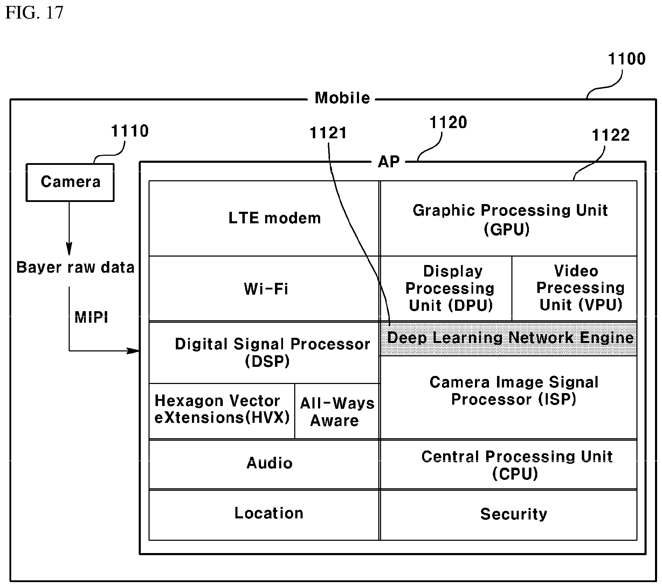

When the first processing unit **1121** is formed on the AP module in the form to be an IP block distinguishable from the second processing unit, as shown in FIG. 17, a Bayer data, which is the first output data which is outputted from the camera module **1110,** is received by the first processing unit **1121** formed of an IP block of the AP module. Thereafter, a second Bayer data is generated in the IP block of the first processing unit **1121** using a first Bayer data, and the second output data which is outputted from the IP block of the first processing unit **1121** is received by the IP block of the second processing unit **1122** to perform image signal processing, thereby generating an image.

The first processing unit 1121, as shown in FIG. 18, may comprise a deep learning network **121-1** that generates a Bayer data having a second resolution from a first Bayer data having a first resolution, and store a Bayer parameter **1121-2,** which is a deep learning parameter and used in generating a Bayer data having a second resolution from a first Bayer data having a first resolution. The deep learning parameter **1121-2** may be stored in the memory. The first processing unit **1121** may be implemented in the form of a chip and generate a second Bayer data from a first Bayer data.

The first processing unit **1121** may comprise one or more processors, and at least one program instruction executed through the processor may be stored in one or more memories. The memory may comprise volatile memory such as SRAM and DRAM. However, the present invention is not limited thereto, and in some cases, the memory 1115 may comprise a non-volatile memory such as a flash memory, a read only memory (ROM), an erasable programmable read only memory (EPROM), an electrically erasable programmable read only memory (EEPROM), and the like.

A typical camera device or camera module receives a Bayer pattern from an image sensor and outputs data in the form of an image through a process of coloring (color interpolation or demosaicing), may extract information comprising Bayer Pattern information from an image and transmit the extracted information to the outside. Here, the Bayer pattern may comprise raw data which is outputted by the image sensor that converts the optical signal included in a camera device or the camera module **1110** into an electrical signal.

The deep learning algorithm (model) applied to the first processing unit **1121** is an algorithm that generates image data having a higher resolution than the image data which has been inputted, and it may mean an optimal algorithm generated by repeatedly performing learning through deep learning training.

Deep learning, sometimes referred to as in-depth learning, it means a set of algorithms related to machine learning that attempts a high level of abstraction (abstractions, summarizing key content or functions in a large amount of data or complex materials) through a combination of several nonlinear transformation methods.

Specifically, deep learning is a learning technique that expresses a certain learning data in a form that a computer can understand (e.g., in the case of an image, pixel information is expressed as a column vector) in order to apply it to learning for many researches (how to create better representation techniques and how to build models to learn them), and it may comprise learning techniques such as Deep Neural Networks (DNN), Deep Belief Networks (DBN), and the like.

The first processing unit **1121** generates a second Bayer data from a first Bayer data. As an example of a method for generating a second Bayer data having a second resolution from a first Bayer data having a first resolution, a deep learning model in FIG. 3 may be used.

The deep learning model of FIG. 3 is a deep learning model to which a deep neural network (DNN) algorithm is applied, and illustrates a process of generating a data having a new resolution as the DNN algorithm is applied.

A deep neural network (DNN) may be specified as a deep neural network in which multiple hidden layers exist between an input layer and an output layer, a convolutional neural network that forms a connection pattern between neurons, similar to the structure of the animal's visual cortex, a connection pattern between neurons similar to the structure of an animal's visual cortex, and a recurrent neural network that builds up a neural network every moment over time.

Specifically, DNN classifies neural networks by reducing and distorting the amount of data by repeating convolution and sub-sampling. That is, DNN outputs class results through feature extraction and acts of classification, and is mainly used in image analysis, and convolution means image filtering.

When the process of performing the deep learning by the first processing unit **1121** to which the DNN algorithm is applied is described with reference to FIG. 3, the first processing unit **1121** performs convolution and sub-sampling for an area intended to increase the magnification based on the Bayer data **110** having a first resolution.

Increasing the magnification means expanding only a specific portion of the first Bayer data. Therefore, since the portion not selected by a user is a portion that the user is not interested in, there is no need to perform a process of increasing the resolution, and convolution and sub-sampling can be performed only on the portion selected by the user. Through this, by not performing unnecessary calculation, it is possible to reduce the amount of calculation, thereby increasing the processing speed.

Sub-sampling refers to a process of reducing the size of an image. At this time, the sub-sampling may use a Max Pool method. Max-Pull is a technique that selects the maximum value in the corresponding area, similar to how neurons respond to the largest signal. Sub-sampling has advantages of reducing noise and increasing the speed of learning.

When convolution and sub-sampling are performed, as illustrated in FIG. 3, a plurality of images **120** may be outputted. Here, the plurality of image data **120** may be feature maps. Thereafter, the plurality of images having different features may be outputted using an upscaling method based on the images that were outputted. The upscaling method means increasing the image by r^{∗}r times using r² filters which are different from one another.

When a plurality of image data **130** is outputted as illustrated in FIG. 3, the first processing unit **1121** may recombine based on these image data and finally output a second Bayer data **140** having a second resolution.

The deep learning parameter used by the first processing unit **1121** to generate a second Bayer data from a first Bayer data by performing deep learning may be derived through deep learning training.

Deep learning can be divided into training and inference. Training refers to a process of learning a deep learning model through input data, and reference refers to a process of performing image processing or the like with a learned deep learning model. That is, an image is processed using a deep learning model to which parameters of a deep learning model derived through training are applied.

In order to generate a second Bayer data from a first Bayer data by performing deep learning, a first deep learning parameter required for Bayer data processing must be derived through training. When a first deep learning parameter is derived through training, an inference that generates a second Bayer data from a first Bayer data may be performed by performing deep learning using a deep learning model to which the corresponding Bayer parameter is applied. Therefore, a training process must be performed to derive parameters for performing deep learning.

The deep learning training process may be performed through repetitive learning, as shown in FIG. 4. After receiving a first sample data **X** and a second sample data Z having different resolutions, deep learning training may be performed based on this.

Specifically, an algorithm that generates an image with a higher resolution may be generated based on the parameters generated by comparing and analyzing the second sample data **Z** and an output data **Y** that has undergone a deep learning training using the first sample data **X** as an input data.

Here, the first output data **Y** is a data which is outputted by performing actual deep learning, and the second sample data **Z** is data which is inputted by a user, it can mean data that can be outputted most ideally when the first sample data **X** is inputted to the algorithm. Here, the first sample data **X** may be a data having a resolution which is lowered by down-sampling the second sample data **Z**. At this time, the degree of downsampling may vary according to a ratio to be enlarged through deep learning, that is, a zoom ratio to perform digital zoom. For example, when the zoom ratio to be performed through deep learning is 3 times, and the resolution of the second sample data **Z** is 9 MP (Mega Pixel), the resolution of the first sampling data **X** should be 1MP so that the resolution of the first output data **Y** whose resolution is enlarged 3 times by performing deep learning becomes 9MP, the second sample data **Z** of 9M is downsampled by 1/9, thereby enabling to generate the first sample data **Y** of IMP.

By comparing and analyzing the first output data **Y** and the second sample data **Z**, which are output through deep learning according to the input of the first sample data **X**, the difference between the two data is calculated, and feedback is given to the parameters of the deep learning model in a way of reducing the difference between the two data. At this time, the difference between the two data may be calculated through a mean squared error (MSE) method, which is one of the loss functions. In addition, various loss functions such as Cross Entropy Error (CEE) may be used.

Specifically, after analyzing the parameters affecting the output data, feedback is provided in a way of changing or deleting parameters or generating new parameters so that the difference between the second sample data **Z**, which is the ideal output data, and the first output data **Y**, which is the actual output data, can be eliminated.

As illustrated in Fig. 4, it is assumed that there are a total of three layers affecting the algorithm, **L1**, **L2**, and **L3**, and a total of eight parameters **P11**, **P12**, **P13**, **P21**, **P22**, **P31**, and **P32** exist in each layer. In this case, when the parameter was changed in a way to increase the value of the parameter of **P22**, if the difference between the first output data **Y** and the second sample data **Z** increases, the feedback can change the algorithm in a way to decrease the parameter of **P22**. Conversely, when the parameter was changed in a way to increase the value of the parameter of **P33**, if the difference between the first output data **Y** and the second sample data **Z** was decreased, the feedback can change the algorithm in a way to increase the parameter of **P33**.

That is, through this method, the algorithm to which deep learning is applied can allow the first output data **Y** to be outputted similarly to the second sample data **Z**. At this time, the resolution of the second sample data **Z** may be the same as or higher than the resolution of the first output data **Y**, and the resolution of the second sample data **Z** may be the same as the resolution of the first output data **Y**.

For deep learning training, as shown in FIG. 4, there is an output result and a comparison target, and training may be performed using a compensation value as well as performing learning through comparison with the comparison target. In this case, after recognizing the surrounding environment first, the current environmental condition may be transmitted to a processor performing deep learning training. The processor performs an action corresponding to this, and the environment again informs the processor of the compensation value according to that action. And the processor takes an action to maximize the reward. Through this process, training can be performed by repeatedly proceeding learning. In addition, deep learning training may be performed using various deep learning training methods.

In general, in order to implement a processor capable of deep learning with a small chip, the process of deep learning and the number of memory gates should be minimized, here, the factors that greatly affect the number of gates are the complexity of the algorithm and the amount of data processed per clock, and the amount of data processed by the processor depends on the input resolution.

Therefore, in order to reduce the number of gates, the processor **1220** according to an embodiment generates an image at a higher magnification in a way that upscaling is performed after reducing the input resolution, and thus there is an advantage of being able to create an image faster.

For example, if an image with the input resolution of 8Mp (Mega Pixel) needs 2× zoom, 2× zoom is performed by upscaling the width and length by 2 times each on the basis of 1/4 area (2Mp). And then 1/4 area (2Mp) is downscaled by 1/4, and after using an image with a resolution of 0.5Mp as an input data for deep learning processing, if 4× zoom is performed in a way that the width and length are respectively upscaled on the basis of the generated image, a zoom image of the same area as the 2× zoom can be generated.

Therefore, since deep learning generates images after being learned as much as the magnification corresponding to resolution loss so as to prevent performance degradation due to loss of input resolution, there is an advantage that can minimize performance degradation.

In addition, deep learning-based algorithms for realizing high-resolution images generally use a frame buffer, but in the case of a frame buffer, real-time operation may be difficult in general PCs and servers due to its characteristics.

However, the first processing unit **1121** according to a second embodiment of the present invention applies an algorithm that has already been generated through deep learning, and thus can be easily applied to a low-spec camera module and various devices comprising the same, and in applying such an algorithm specifically, since high-resolution is realized by using only a few line buffers, there is also an effect of implementing a processor with a chip having a relatively small size.

The first processing unit **1121** includes at least one line buffer that stores the first Bayer data for each line, and when a predetermined number of first Bayer data is stored in the line buffer, generation of second Bayer data can be performed for the first Bayer stored in the line buffer. The first processing unit **1121** separately receives the first Bayer data by line, and stores the first Bayer data which is separately received by each line in a line buffer. After receiving the first Bayer data of all the lines, the first processing unit **1121** does not generate the second Bayer data, and when the first Bayer data of a certain number of lines is stored, the first Bayer data stored in the line buffer for the second Bayer data generation can be performed. To increase the resolution corresponding to 9 times, that is, 3× zoom, if a first Bayer data of 3 lines is stored in the line buffer, a second Bayer data for the first Bayer data of the 3 stored lines is generated. The specific configuration in which the line buffer is being formed will be explained with reference to FIG. 5.

Referring to FIG. 5, the first processing unit **121** may comprise: a plurality of line buffers **11** that receives a first Bayer data; a first data alignment unit **221** that generates a first data array for arranging the first Bayer data, which is outputted through the line buffers, by each wavelength band; a deep learning processor **222** that performs deep learning; a second data alignment unit **223** that generates a second Bayer data by arranging a second data array, which is outputted through the deep learning processor **222**, in a Bayer pattern; and a plurality of line buffers **12** that outputs the second Bayer data which is outputted through the second data alignment unit **223**.

The first Bayer data is information including the Bayer pattern as described previously, and although it is described as a Bayer data in FIG. 5, it may be defined as a Bayer image or a Bayer pattern.

In addition, in FIG. 5, the first data alignment unit **221** and the second data alignment unit **223** are illustrated as separate components for convenience, but not limited thereto, and the deep learning processor **222** may also perform the functions which are performed by the first data alignment unit **221** and the second data alignment unit **223**, which will be described later.

Referring to FIG. 5, a first Bayer data having a first resolution, which is image information for the area selected by a user and received by the image sensor **110**, may be transmitted to n+1 line buffers **11a**, **11b**, **... 11n**, **11n+1.** As described previously, since the Bayer image having the second resolution is generated only for the area selected by the user, image information for the area not selected by the user is not transmitted to the line buffer **11**.

Specifically, the first Bayer data comprises a plurality of row data, and the plurality of row data may be transmitted to the first data alignment unit **221** through the plurality of line buffers **11**.

For example, if the area where deep learning is to be performed by the deep learning processor **222** is a 3 × 3 area, a total of three lines must be simultaneously transmitted to the first data alignment unit 221 or the deep learning processor **222**, so that deep learning can be performed. Therefore, information on the first line among the three lines is transmitted to the first line buffer **11a**, and then stored in the first line buffer **11a**, and information on the second line among the three lines may be transmitted to the second line buffer **11b**, and then stored in the second line buffer **11b**.

After that, in the case of the third line, since there is no information on the line which is received thereafter, it may not be stored in the line buffer **11** and may be directly transmitted to the deep learning processor **222** or the first data alignment unit **221**.

At this time, since the first data alignment unit **221** or the deep learning processor **222** must simultaneously receive information on the three lines, information on the first line and information on the second line which have been stored in the first line buffer **11a** and the second line buffer **11b** may also be transmitted simultaneously to the deep learning processor **222** or a first image alignment unit **219**.

On the contrary, if the area on which deep learning is to be performed by the deep learning processor **222** is (N+1) × (N+1), deep learning can be performed only when a total of (N+1) lines transmits simultaneously to the first data alignment unit **221** or the deep learning processor **222**. Therefore, the information on the first line among (N+1) lines may be stored the first line buffer **11a** after being transmitted to the first line buffer **11a**; the information on the second line among the (N+1) lines may be stored in the second line buffer **11b** after being transmitted to the second line buffer **11b**; and the information on the Nth line among the (N+1) lines may be stored in the Nth line buffer **11n** after being transmitted to the Nth line buffer **11n**.

After that, in the case of the (N+1)th line, since there is no information on the line which is received thereafter, it may not be stored in the line buffer **11** and may be directly transmitted to the deep learning processor **222** or the first data alignment unit **221**, and as explained previously, at this time, since the first data alignment unit **221** or the deep learning processor **222** must simultaneously receive information on the (N+1) lines, information on the first line through the nth line which have been stored in the line buffers **11a** through **11n** may also be transmitted simultaneously to the deep learning processor **222** or a first image alignment unit **219**.

After receiving a Bayer data from the line buffer **11**, the first image alignment unit **219** generates a first data array by arranging Bayer data for each wavelength band, and then may transmit the first data array to the deep learning processor **222**.

The first image alignment unit **219** may generate a first data array which is arranged by classifying the received information into a specific wavelength or a specific color of red, green, or blue.

Thereafter, the deep learning processor **222** may generate a second data array by performing deep learning based on the first data array which has been received through the first image alignment unit **219**.

Therefore, the deep learning processor **222** may generate a second data array having a second resolution having a higher resolution than the first resolution by performing deep learning based on the first data array which has been received through the first image alignment unit **219**.

For example, as described previously, if a first data array is received for a 3 × 3 area, deep learning is performed on the 3 × 3 area, and if the first data array is received for an (n+1) × (n+1) area, deep learning may be performed on the (n+1) × (n+1) area.

Thereafter, the second data array generated by the deep learning processor **222** is transmitted to the second data alignment unit **223**, and the second data alignment unit **223** may convert the second data array into a second Bayer data having a Bayer pattern.

Thereafter, the converted second Bayer data is outputted to the outside through a plurality of line buffers **12a**, and the second Bayer data which has been outputted may be generated as an image having a second resolution, which is a higher resolution than the first resolution, by another process.

FIGS. 6 and 7 are diagrams illustrating a state in which a first Bayer image having an image of a first resolution is converted into a second Bayer image having a second resolution by the processing unit **1121.**

When a user selects a specific area from a Bayer image **10** having a first resolution, the first processing unit **1121** may convert the resolution on that area, and as a result, as illustrated in FIGS. 6 and 7, a Bayer image **40** having a second resolution may be generated.

The first processing unit **1121** may preprocess the second Bayer data. The first processor **1121** may generate a second Bayer data having a second resolution using a first Bayer data having a first resolution, and may perform pre-processing on the second Bayer data which has been generated. At this time, the first processing unit **1121** may perform at least one of white balance, de-nosing, de-focus, de-blur, and di-mosaic. In addition, various preprocess which is corresponding to preprocess can be performed.

In addition to the super resolution for increasing the resolution of the Bayer data in the first processing unit **1121,** the computation amount of the second processing unit **1122** can be reduced by performing image preprocessing that can be processed by the second processing unit **1122.** That is, the pre-processing function of the second processing unit **1122** is performed by the first processing unit **1121** to share the function, thereby reducing the burden on the ISP. The first processing unit **1121** may further comprise a pre-processing unit that performs pre-processing.

At this time, the first processing unit **1121** may perform pre-processing of the second Bayer data using a convolutional neural network which is learned by performing deep learning. In the case, when there is a pre-processing process that can be processed using the same deep learning network as the process of increasing the resolution of Bayer data among the pre-processing processes performed by the first processing unit **1121**, deep learning parameters for the preprocessing process are stored and the preprocessing process can be performed. It may also comprise a separate deep learning network for one or more preprocessing processes and a memory for storing corresponding deep learning parameters.

The first processing unit **1121** may preprocess the second Bayer data to generate an RGB image or an ycbcr image. A pre-processed third Bayer data may be generated by performing pre-processing on a second Bayer data having a second resolution, or further, an RGB image or an ycbcr image which is converted from the RGB image may be generated through the pre-processing. The first processing unit **1121** performs a plurality of pre-processing processes, and may output various data according to the performed pre-processing. That is, a third Bayer data which is corresponding to a previous RGB image may be generated from the second Bayer data. Although the third Bayer data is not an RGB image, a third Bayer data, which is a Bayer data on which white balance has been performed, may be generated through preprocessing such as white balance. Alternatively, an RGB image may be generated by performing pre-processing processes for generating an RGB image for the second Bayer data. Furthermore, the ycbcr image may be generated through the ycbcr conversion of the RGB image generated as described above. When converted from an RGB image to an ycbcr image, the ycbcr image can be displayed directly on a display.

The pre-processing process performed in the first processing unit **1121** may be changed according to a user's setting, a use environment, or a working state of the ISP, which is the second processing unit **1122**. The first processing unit **1121** performs pre-processing to share the function of the ISP, which is the second processing unit **1122,** and it may be set which pre-processing process is to be performed by the first processing unit **1121** according to the user's setting. Or, if it is necessary to share the ISP function according to the use environment or the current working situation of the ISP, the preprocessing process to be performed may be set in the first processing unit **1121.** The setting values for preprocessing execution in the first processing unit **1121** may be determined by receiving environment information from one or more processors. Alternatively, the setting values for preprocessing execution in the first processing unit **1121** may be applied by storing the setting values according to environment information and the like in a look-up table (LUT).

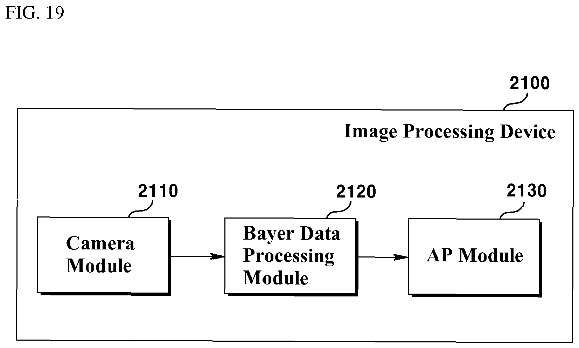

The image processing device **2100** according to another embodiment of the present invention, as shown in FIG. 19, may comprise a camera module **2110,** a Bayer data processing module **2120,** and an AP module **2130.** The first processing unit **1121** of the image processing device **1130** of FIG. 13 or FIG. 16 may be configured as a Bayer data processing module **2120** which is a separate module, not within the AP module. Except that the Bayer data processing module **2120** is implemented as a separate module from the AP module **2130**, the image processing process performed by the image processing device **2100** of FIG. 19 corresponds to the image processing process performed in the image processing device **1130** of FIG. 13, and thus hereinafter, descriptions of the image processing device **2100** of FIG. 19, that overlap with the image processing process performed in the image processing device **1130** of FIG. 13 will be omitted and briefly described.

The camera module **2110** comprises an image sensor, and a Bayer data processing module **2120** generates a second Bayer data having a second resolution using a first Bayer data having a first resolution output from the camera module **2110.** The Bayer data processing module **2120** may be implemented in the form of a separate chip which is distinguishable from the AP module **2130.**

The Bayer data processing module **2120** may generate a second Bayer data from a first Bayer data, and the Bayer data processing module **2120** may comprise a pre-processing unit that preprocesses the second Bayer data. At this time, the pre-processing unit may generate any one of a third Bayer data, an RGB image, or an ycbcr image by preprocessing the second Bayer data.

The AP module **2130** receives output data which is being outputted from the Bayer data processing module **2120** and performs image processing.

An image processing device according to another embodiment of the present invention comprises a first processing unit that generates a second Bayer data having a second resolution using a first Bayer data having a first resolution, wherein the first processing unit may be formed distinguishably from the image signal processing unit which is formed in the AP module. Here, the first processing unit **1121** is a configuration corresponding to the first processing unit **1121** of the image processing device **1130** of FIG. 13 or FIG. 16, and the Bayer data processing module **2120** of the image processing device **2100** of FIG. 19. An image processing device according to another embodiment of the present invention may comprise a first processing unit; the first processing unit may generate a second Bayer data from a first Bayer data, and may comprise a pre-processing unit for pre-processing the second Bayer data. At this time, the pre-processing unit may generate any one of a third Bayer data, an RGB image, or an ycbcr image by preprocessing the second Bayer data.

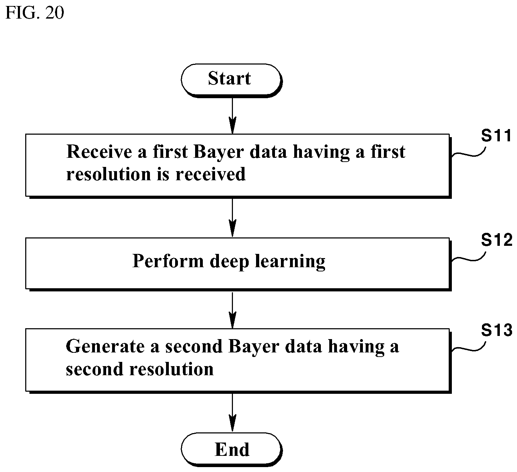

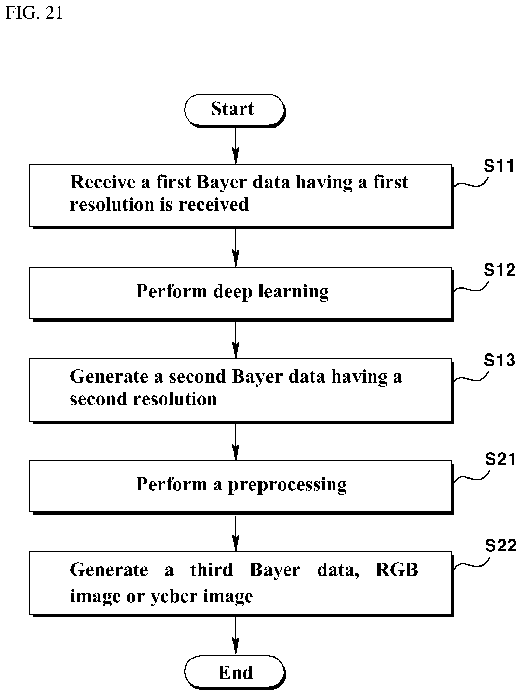

FIG. 20 is a flowchart of an image processing method according to a second embodiment of the present invention, and FIG. 21 is a flowchart of an image processing method according to another embodiment of the present invention. Since detailed description of each step in FIGS. 20 to 21 corresponds to the detailed description of the image processing device of FIGS. 13 to 19, hereinafter, overlapping descriptions will be omitted.

The image processing method according to the second embodiment of the present invention relates to a method for processing an image in an image processing device comprising one or more processors.

In step S11, the first Bayer data having a first resolution is received, and by using a convolutional neural network which is learned by performing deep learning in step 12, a second Bayer data having a second resolution is generated in step S13.

After step S13, the second Bayer data may be preprocessed in step S21, and after performing pretreatment, a step for generating any one of the third Bayer data, RGB image, or ycbcr image may further be included in step S22. Thereafter, it may further comprise a step of generating an image that can be outputted to the display through image signal processing.

Modified embodiments according to the present embodiment may comprise some configurations of the first embodiment described with reference to FIGS. 1 to 12 and some configurations of the second embodiment described with reference FIGS. 13 to 21, together. That is, the modified embodiment may comprise the embodiment described with reference to FIGS. 1 to 12, but some configurations of the embodiment described with reference to FIGS. 1 to 12 are omitted, and may comprise some configurations of the embodiment described with reference to corresponding FIGS. 13 to 21. Or, the modified embodiment may omit some configurations of the embodiment described with reference to FIGS. 13 to 21, but may comprise some configurations of the embodiment described with reference to corresponding FIGS. 1 to 12.

Features, structures, and effects described in the above embodiments are included in at least one embodiment, and are not necessarily limited to only one embodiment. Furthermore, the features, structures, effects, and the like exemplified in each embodiment may be combined or modified for other embodiments by a person having ordinary knowledge in the field to which the embodiments belong. Therefore, contents related to such combinations and modifications should be interpreted as being included in the scope of the embodiments.

Meanwhile, embodiments of the present invention can be implemented in computer-readable code on a computer-readable recording medium. The computer-readable recording medium includes all kinds of recording devices in which data readable by a computer system is being stored.

Examples of computer-readable recording media include such as ROM, RAM, CD-ROM, magnetic tape, floppy disks, and optical data storage devices, and in addition, computer readable recording media are distributed over network coupled computer systems, codes that can be read by a computer in a distributed way can be stored and executed. In addition, functional programs, codes, and code segments for implementing the present invention can be easily inferred by programmers in the technical field to which the present invention belongs.

Although embodiments have been described so far with limited embodiments and drawings, those skilled in the art can make various modifications and variations from the above description. For example, the described technologies are performed in a different order than the described method, and/or components such as the described system, structure, device, circuit, and the like are coupled or combined in a form different from the described method, or even if it is replaced or substituted by another component or equivalent, an appropriate result can be achieved. Therefore, other embodiments and equivalents to the claims are also within the scope of the claims which will be described later.

## Claims

1. A camera device comprising:
an image sensor configured to generate a first Bayer data having a first resolution; and
a processor configured to output a second Bayer data having a second resolution using the first Bayer data.

2. The camera device according to claim 1,
wherein the processor comprises a convolutional neural network trained to output a second Bayer data having a second resolution using a first Bayer data.

3. The camera device according to claim 2,
wherein a training set of the convolutional neural network comprises a first Bayer data having a first resolution and a second Bayer data having a second resolution.

4. The camera device according to claim 1,
wherein the second resolution is higher than the first resolution.

5. The camera device according to claim 1,
wherein the second Bayer data is outputted to an image signal processor.

6. The camera device according to claim 1,
wherein the processor comprises:
a receiving unit configured to receive the first Bayer data; and
a convolutional neural network configured to output a second Bayer data having a second resolution using the first Bayer data.

7. A method comprising the steps of:
receiving a first Bayer data having a first resolution; and
outputting a second Bayer data having a second resolution from the first Bayer data using a convolutional neural network that has been learned.

8. The method according to claim 7,
wherein the first Bayer data is a data that is being outputted from an image sensor.

9. The method according to claim 7,
wherein a training set of the convolutional neural network comprises a first Bayer data having a first resolution and a second Bayer data having a second resolution.

10. The method according to claim 7,
wherein the second Bayer data is outputted to an image signal processor.
